# EUROPEAN PATENT SPECIFICATION

(11) **EP 1 752 311 B1**
(45) Date of publication and mention of the grant of the patent: **24.12.2008**
(21) Application number: 05425597.1
(22) Date of filing: 12.08.2005
(51) Int. Cl.: B60B 3/04

(54) **Method and device for welding by means of a laser beam a rim to a disc of a wheel for vehicles**
Verfahren und Vorrichtung zum Schweißen mittels eines Laserstrahls von einer Felge an eine Fahrzeugradscheibe
Méthode et dispositif pour souder par le moyen d'un faisceau laser une jante à un disque d'une roue de véhicule

(43) Date of publication of application: 14.02.2007
(73) Proprietor: Mussino S.r.l., 10098 Rivoli TO (IT)
(72) Inventor: Caprioglio, Luigi, 10098 Rivoli (Torino) (IT)
(74) Representative: Gallarotti, Franco

(56) References cited:
- US-A- 5 431 486
- PATENT ABSTRACTS OF JAPAN vol. 1999, no. 12, 29 October 1999 (1999-10-29) & JP 11 192566 A (TOPY IND LTD), 21 July 1999 (1999-07-21)
- PATENT ABSTRACTS OF JAPAN vol. 018, no. 449 (M-1660), 22 August 1994 (1994-08-22) & JP 06 142955 A (NISSAN MOTOR CO LTD), 24 May 1994 (1994-05-24)
- PATENT ABSTRACTS OF JAPAN vol. 1999, no. 14, 22 December 1999 (1999-12-22) & JP 11 240301 A (TOPY IND LTD), 7 September 1999 (1999-09-07)

## Description

The present invention relates to a method and a device for laser welding of a rim to the disk of a wheel for motor vehicles.

Wheels for motor vehicles, which in their most widespread version are made of steel plate, have now for many years been of a standardized type, albeit with slight differences. Schematically, the wheel is made up of two parts: a rim and a disk.

The rim, obtained by rolling a ring made of steel plate, in addition to holding the tyre must also guarantee air tightness, given the by now consolidated use of "tubeless" technology.

The disk is obtained starting from a plane disk made of steel plate. With subsequent pressing operations, the shape of the disk is obtained with the perforations for fitting to the hub and with the particular more or less complex bell shape.

The above two parts are pre-assembled and joined together by means of force fitting; in particular, the rim receives the disk within it.

At this point, the welding operation comes into play for consolidating the union of the two parts forming the wheel. The standard welding process is carried out by means of a process of arc welding with welding rod and protective gas.

The arc-welding technique is not without drawbacks that have led to the search for new welding techniques.

Arc welds are typically of good quality, but, on account of the oil normally present in the steel plates, there exists the possibility that large quantities of fumes are formed, which, in some cases, can induce a porosity of the steel plates to be welded that reduces the quality of the weld.

Arc welding produces a considerable amount of incandescent weld-pool splashes, which in many cases deposit on the wheel itself and must be removed by brushing.

In addition, a further drawback is represented by the fact that arc welding is very slow.

In order to obtain very short welding-cycle times it is customary to use four welding torches simultaneously in order to perform the four stretches of weld between the rim and the disk simultaneously.

Arc welding is carried out using a welding rod, and this entails stopping the machine every 15 to 20 minutes to clean the feed nozzle that gets dirtied by the weld-pool splashes (an operation that is performed using manually operated rotating brushes).

These stoppages of the production line tend to reduce the efficiency of the production line by at least 10%. Machines for arc welding involve a lot of maintenance and must be stopped every day, at the end of the processing cycle, to undergo careful cleaning operations.

The arc-welding technique moreover presents the problem of the rejects that must be repaired; this problem further reduces the efficiency and output of the production line.

Arc welding moreover involves application of heat, and this generates non-negligible geometrical deformations, especially for use on vehicles designed for high speeds.

When moving, the wheel is subject to fatigue; in arc welds there intrinsically exist internal stresses, which, when the welds are subjected to repeated stress cycles, tend to be released giving rise to a subsequent deformation of the wheel.

In order to overcome the above drawbacks, laser welding is being introduced into this field of applications.

As compared to arc welding, laser welding presents the following advantages:
- the weld proves more homogeneous on account of the uniformity of the material (there is no filler material involved);
- thermal deformations are absent since the application of heat is less than one tenth that involved in the case of arc welding;
- weld-pool splashes are absent; in this case, no brushing operation is necessary;
- there are no technical stoppages of the manufacturing process; in arc welding the cleanliness of the nozzles and the replacement of the welding rods involve stoppages;
- the production process is noiseless, with fumes reduced by 10% with respect to arc welding; and
- the working area is clean.

So far, to the knowledge of the present applicant, the methods of laser welding of wheels of motor vehicles that have been proposed envisage that the laser beam will be applied radially from the outside towards the inside of the rim (see, for example, the document No. US 5 431 486).

The above welding process is easy to carry out, but continues to present some disadvantages.

The first disadvantage is represented by the fact that, in order to obtain a mechanically resistant weld in the fit between the rim and the disk, it is necessary to fuse a considerable amount of steel plate. In this type of welding there is required a considerable laser power in order to obtain reduced cycle times, or else it is necessary to use more than one laser source, with obvious additional costs. Also this solution presents the problem caused by the oil present in the welding area. At the moment when the laser beam penetrates into the welding area, there is a marked development of vapour. As it exits violently from the weld pool, this vapour produces dangerous porosities (see the patent No. US 5,431,486).

JP11192566 A describes a method of laser welding according to the preamble of claim 1.

The purpose of the present invention is to provide a device and a method for laser welding of a rim to the disk of a wheel for motor vehicles so as to guarantee maximum reliability and precision of processing at a relatively low cost.

With a view to achieving said purposes, the subject of the present invention is a method for laser welding of a rim to the disk of a wheel for motor vehicles according to claim 1.

A further subject of the invention is a device for laser welding of a rim to the disk of a wheel for motor vehicles.

The type of welding proposed herein calls for a correct positioning of the laser beam on the area of joining between disk and rim and a good alignment of the two steel plates. In this case, the power required of the laser sources is clearly lower than the preceding case of radial welding from outside in so far as the entire penetration of the laser beam is useful for constructing the resistant section. In this type of welding, the laser beam coming into contact with the joint of the two steel plates vaporizes the oil present and then starts to fuse the metal, so that the formation of the gases anticipates fusion of the steel plates, and exit of the gases is free.

Further advantageous and preferred characteristics of the invention are specified in the dependent claims.

Said characteristics and advantages will be immediately understandable from the ensuing description with reference to the annexed plate of drawings, which are provided purely by way of non-limiting example and in which:
- Figure 1 is a partial perspective view of the radial weld from the outside according to the known art (US 5,431,486);
- Figure 2 illustrates a partial perspective view of the weld according to the present invention;
- Figures 3A, 3B, 3C, are schematic views of three particular cases of fitting between rim and disk; and
- Figure 4 is a partial perspective view of the device for laser welding according to the present invention.

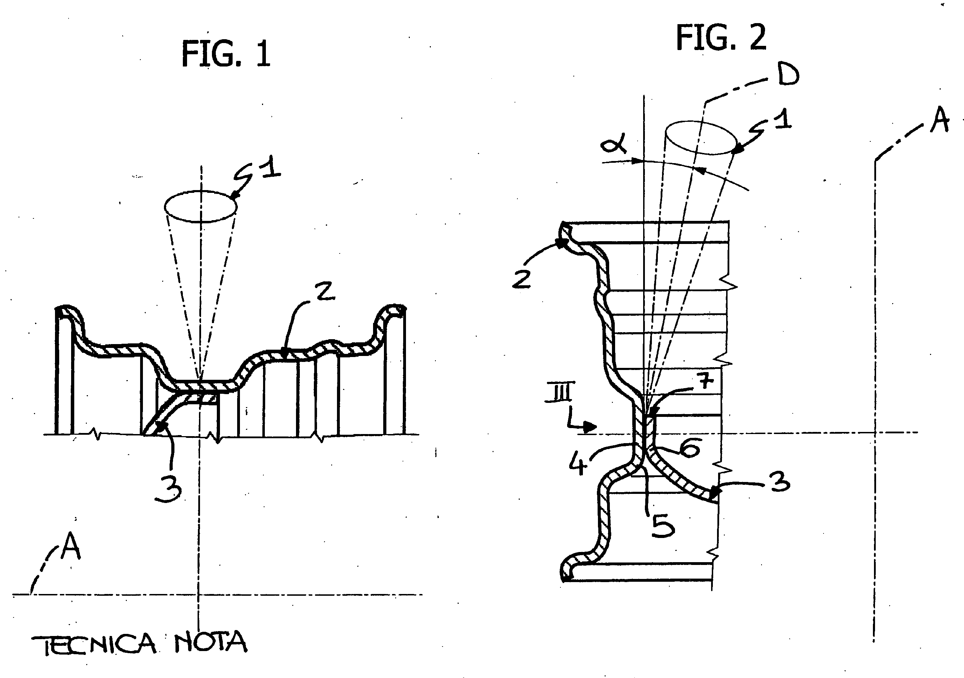

Figure 1 illustrates a conventional technique of welding using a laser beam.

In particular, the laser beam 1 is applied in a radial direction from the outside towards the inside of a rim. Designated as a whole by the reference number 2 is a rim, and designated as a whole by the reference number 3 is a disk. In the example illustrated in Figure 1, the laser beam 1 is applied in a direction perpendicular to the axis A of the wheel.

With reference to Figure 2, which regards a preferred version of the invention, the laser beam 1 is applied in a substantially axial direction towards the inside of the rim.

The direction D of application of the laser beam 1 in this case forms an angle α with respect to a direction parallel to the axis A of the wheel, for example, in the region of 8°-10° and in any case sufficient for preventing any interference between the cone of the focused beam and the internal surface of the rim.

With reference to Figure 2, the rim 2 envisages a circumferential wall 4 with an internal surface 5, and the disk 3 envisages a circumferential portion 6 in contact with the internal surface 5 of the rim 2. The circumferential portion 6 has a circumferential end edge 7.

With reference to Figure 2 the laser beam 1 is focused, in the area of contact between the circumferential portion 6 of the disk 3 and the internal surface 5 of the rim 2, and in particular in a position corresponding to the circumferential end edge 7 of the disk 3.

The weld that is obtained is more homogeneous and requires a smaller power of the laser sources as compared to the prior art.

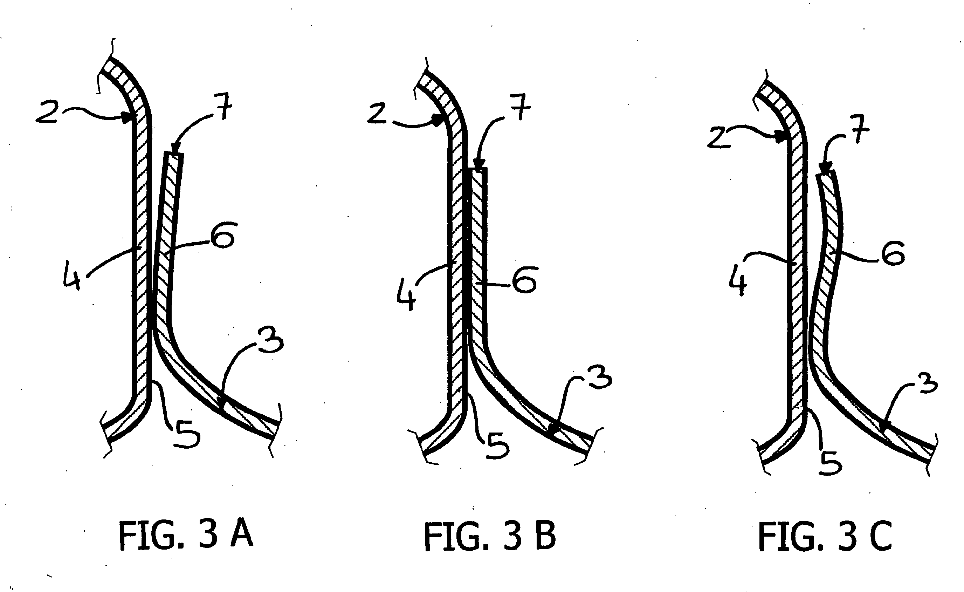

Figures 3A, 3B, and 3C present three possible conditions in which the area of contact, designated by III in Figure 2, of the rim-disk structure may be found.

In particular, the condition of Figure 3A arises in the case where the disk 3 does not come completely into contact with the rim 2. In particular, the circumferential portion 6 of the disk is not completely in contact with the internal surface 5 of the rim, and the circumferential end edge 7 is located at a distance from the internal wall 5 of the rim.

Figure 3B illustrates the ideal case in which the circumferential portion 6 of the disk and the internal surface 5 of the rim mate completely.

Finally, illustrated in Figure 3C is a situation in which the circumferential edge 6 of the disk has a deformation that keeps it at a distance from the internal surface 5 of the rim.

In the welding method according to the present invention of major importance is the operation of positioning of the laser beam 1 in the area of contact of the two steel plates.

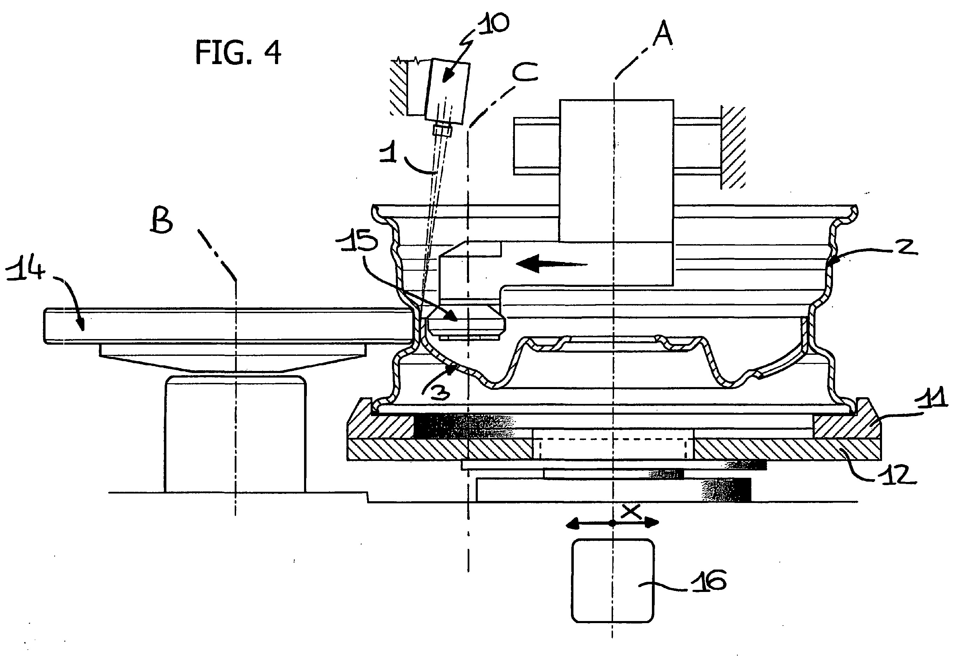

With reference to Figure 4, the device according to the invention comprises: means 10 for focusing the laser beam 1; means 11 for supporting the structure to be welded constituted by the rim 2 with the disk 3 pre-assembled by force fitting within it; and means for imparting a relative movement between the structure to be welded and the focused laser beam 1.

A pair of counter-rotating wheels 14 and 15 engages, on opposite sides, the circumferential walls of the rim and disk fitted together.

In a preferred version, the means for imparting the relative motion between the structure to be welded and the focused laser beam comprise motor means 16 that control rotation of a rotating platform 12 on which the structure to be welded is mounted.

In a variant, the rotating platform 12 is free to turn, and the motor means are made up of the pair of counter-rotating wheels 14 and 15.

In any case, the first wheel 14 of the pair of counter-rotating wheels has one axis B fixed, and the second wheel 15 has an adjustable axis C that can be translated in a direction X perpendicular to the axis C of the second wheel, by means of actuator means of any type (not illustrated). Said actuator means are designed to press the wheel 15 against the wheel 14 with a force adequate for guaranteeing that any possible defects of the type illustrated in Figures 3A and 3C will be eliminated, bringing the steel plates back into the optimal configuration of Figure 3B.

With reference to Figure 4, both the fixed axis B and the adjustable axis C are parallel to the axis A of the wheel.

The wheel 15 enables compression of the area of contact between the circumferential portion 6 of the disk and the internal surface 5 of the rim in a position corresponding to the circumferential end edge 7 of the disk. The axis C of the wheel 15 can be regulated in the direction X to reduce to a minimum the deformations presented in Figures 3A and 3C.

The diameters of the wheels 14 and 15 are designed on the basis of Hertzian theory of concentrated contacts, in such a way that:
- the wheel 14 does not introduce any thinning of the wheel rim (there is thus necessary a rather large diameter of the wheel 14); and
- the wheel 15 will have a diameter as small as possible for creating the deformation necessary to the edge of the disk so as to cause it to mate perfectly with the rim (as illustrated in the case represented in Figure 3B).

In any case, the structure, formed by the supporting means 11 and by the rotating platform 12, is mobile for the purposes of adapting the tolerances of the rim (ovality and tolerances of diameter).

Of course, without prejudice to the principle of the invention, the details of construction and the embodiments may vary widely with respect to what is described and illustrated herein purely by way of example, without thereby departing from the scope of the present invention.

## Claims

1. A method for laser welding (1) of a rim (2) to the disk (3) of a wheel for motor vehicles, in which:
- said rim (2) envisages a circumferential wall (4), with an internal surface (5); and
- said disk (3) envisages a circumferential portion (6), which is in contact with said internal surface (5) of the rim, said circumferential portion (6) having a circumferential end edge (7),
wherein said method comprises the operation of focusing the laser beam (1) in the area of contact between the circumferential portion (6) of the disk and the internal surface (5) of the rim, in a position corresponding to said circumferential end edge (7) of the disk, and wherein said method envisages the operation of providing:
- means (10) for focusing the laser beam (1);
- means (11) for supporting the structure to be welded, constituted by the rim (2) with the disk (3) pre-assembled by force fitting within it; and
- means for imparting a relative movement between the structure to be welded (2, 3) and the focused laser beam (1), the means (12) for imparting a relative movement between the structure to be welded (2, 3) and the focused laser beam being pre-arranged so as to comprise means for setting the structure to be welded (2, 3) in rotation about the axis (A) of the wheel, wherein said method is **characterized in that** the means (11) for supporting the structure to be welded (2, 3) are pre-arranged so as to comprise at least one pair of counter-rotating wheels (14, 15), which engage, on opposite sides, the circumferential wall (4) of the rim.

2. The method according to Claim 1, **characterized in that** the means for imparting a relative movement between the structure to be welded (2, 3) and the focused laser beam (1) are pre-arranged so as to comprise motor means (16) that control rotation of a rotating platform (12) on which the structure (2, 3) to be welded is to be mounted.

3. The method according to Claim 1, **characterized in that** it comprises the operation of providing a freely rotating platform (12), on which the structure (2, 3) to be welded is to be mounted, and the motor means are pre-arranged so as to be made up of said at least one pair of counter-rotating wheels (14, 15).

4. The method according to Claim 1, **characterized in that** it comprises the operations of:
- providing a first wheel (14) of said pair of counter-rotating wheels with a fixed axis (B), and a second wheel (15) with an adjustable axis (C) that can be translated in a direction (X), perpendicular to the axis (C) of the second wheel (15); and
- providing actuator means designed to press the second wheel (15) against the first wheel (14) in order to eliminate any possible faulty positioning of the parts (2, 3) to be welded.

5. A device for laser welding a rim (2) to a disk (3) of a wheel for motor vehicles, in which:
- said rim (2) envisages a circumferential wall (4), with an internal surface (5); and
- said disk (3) envisages a circumferential portion (6), which is in contact with said internal surface (5) of the rim and has a circumferential end edge (7),
wherein said device comprises means (10) for focusing the laser beam (1) in the area of contact between the circumferential portion (6) of the disk and the internal surface (5) of the rim, in a position corresponding to said circumferential end edge (7) of the disk , and wherein the means (10) for focusing the laser beam comprise:
- means (10) for focusing the laser beam;
- means (11) for supporting the structure to be welded, constituted by the rim (2) with the disk (3) pre-assembled by force fitting within it; and
- means for imparting a relative movement between the structure to be welded (2, 3) and the focused laser beam, the means for imparting a relative movement between the structure to be welded (2, 3) and the focused laser beam (1) comprising means (12) for setting the structure to be welded (2, 3) in rotation about the axis (A) of the wheel, wherein said device is **characterized in that** the means (11) for supporting the structure to be welded (2, 3) comprise at least one pair of counter-rotating wheels (14, 15), which engage, on opposite sides, the circumferential wall (4) of the rim.

6. The device according to Claim 5, **characterized in that** the means for imparting a relative movement between the structure to be welded (2, 3) and the focused laser beam (1) comprise motor means (16) that control rotation of a rotating platform (12), on which the structure (2, 3) to be welded is to be mounted.

7. The device according to Claim 5, **characterized in that** the device comprises a freely rotating platform (12), on which the structure (2, 3) to be welded is to be mounted, and **in that** the motor means are made up of said at least one pair of counter-rotating wheels (14, 15).

8. The device according to Claim 5, **characterized in that** a first wheel (14) of said pair of counter-rotating wheels has a fixed axis (B), and a second wheel (15) has an adjustable axis (C) that can be translated in a direction (X), perpendicular to the axis (C) of the second wheel (15), via actuator means designed to press the second wheel (15) against the first wheel (14) with a force sufficient for eliminating any possible faulty positioning of the parts (2, 3) to be welded.

## Patentansprüche

1. Verfahren zum Laserschweißen (1) einer Felge (2) an die Scheibe (3) eines Rades für Kraftfahrzeuge, wobei:
die Felge (2) eine Umfangswand (4) mit einer Innenfläche (5) aufweist; und
die Scheibe (3) einen Umfangsabschnitt (6) aufweist, der in Kontakt mit der Innenfläche (5) der Felge ist, wobei der Umfangsabschnitt (6) eine Umfangs-Abschlusskante (7) hat,
wobei das Verfahren den Vorgang des Fokussierens des Laserstrahls (1) in dem Bereich von Kontakt zwischen dem Umfangsabschnitt (6) der Scheibe und der Innenfläche (5) der Felge an einer Position umfasst, die der Umfangs-Abschlusskante (7) der Scheibe entspricht, und wobei das Verfahren den Vorgang umfasst, mit dem bereitgestellt wird:
eine Einrichtung (10) zum Fokussieren des Laserstrahls (1);
eine Einrichtung (11) zum Tragen der zu verschweißenden Struktur, die durch die Felge (2) mit der durch Presspassen darin vormontierten Scheibe (3) gebildet wird; und
eine Einrichtung, mit der eine relative Bewegung zwischen der zu verschweißenden Struktur (2, 3) und dem fokussierten Laserstrahl (1) bewirkt wird, wobei die Einrichtung (12), mit der eine relative Bewegung der zu verschweißenden Struktur (2, 3) und dem fokussierten Laserstrahl bewirkt wird, so voreingerichtet ist, dass sie eine Einrichtung umfasst, mit der die zu verschweißende Struktur (2, 3) in Drehung um die Achse (A) des Rades herum versetzt wird, wobei das Verfahren **dadurch gekennzeichnet ist, dass** die Einrichtung (11) zum Tragen der zu verschweißenden Struktur (2, 3) so voreingerichtet ist, dass sie wenigstens ein Paar gegenläufiger Räder (14, 15) umfasst, die an einander gegenüberliegenden Seiten mit der Umfangswand (4) der Felge in Eingriff sind.

2. Verfahren nach Anspruch 1, **dadurch gekennzeichnet, dass** die Einrichtung, mit der eine relative Bewegung zwischen der zu verschweißenden Struktur (2, 3) und dem fokussierten Laserstrahl (1) bewirkt wird, so voreingerichtet ist, dass sie eine Motoreinrichtung (16) umfasst, die Drehung einer drehenden Plattform (12) steuert, an der die zu verschweißende Struktur (2, 3) angebracht werden soll.

3. Verfahren nach Anspruch 1, **dadurch gekennzeichnet, dass** es den Vorgang des Bereitstellens einer sich frei drehenden Plattform (12) umfasst, an der die zu verschweißende Struktur (2, 3) angebracht werden soll, und die Motoreinrichtung so voreingerichtet ist, dass sie aus dem wenigstens einen Paar gegenläufiger Räder (14, 15) besteht.

4. Verfahren nach Anspruch 1, **dadurch gekennzeichnet, dass** es die folgenden Vorgänge umfasst:
Versehen eines ersten Rades des Paars gegenläufiger Räder mit einer feststehenden Achse (B) und eines zweiten Rades (15) mit einer verstellbaren Achse (C), die in einer Richtung (X) senkrecht zu der Achse (C) des zweiten Rades (15) verschoben werden kann; und
Bereitstellen einer Betätigungseinrichtung, die dazu dient, das zweite Rad (15) an das erste Rad (14) zu pressen, um mögliche fehlerhafte Positionierung der zu verschweißenden Teile (2, 3) aufzuheben.

5. Vorrichtung zum Laserschweißen einer Felge (2) an eine Scheibe (3) eines Rades für Kraftfahrzeuge, wobei:
die Felge (2) eine Umfangswand (4) mit einer Innenfläche (5) aufweist; und
die Scheibe (3) einen Umfangsabschnitt (6) aufweist, der in Kontakt mit der Innenfläche (5) der Felge ist und eine Umfangs-Abschlusskante (7) hat,
wobei die Vorrichtung eine Einrichtung (10) zum Fokussieren des Laserstrahls (1) im Bereich von Kontakt zwischen dem Umfangsabschnitt (6) der Scheibe und der Innenfläche (5) der Felge an einer Position umfasst, die der Umfangs-Abschlusskante (7) der Scheibe entspricht, und wobei die Einrichtung (10) zum Fokussieren des Laserstrahls umfasst:
eine Einrichtung (10) zum Fokussieren des Laserstrahls;
eine Einrichtung (11) zum Tragen der zu verschweißenden Struktur, die durch die Felge (2) mit der durch Presspassen darin vormontierten Scheibe (3) gebildet wird; und
eine Einrichtung, mit der eine relative Bewegung zwischen der zu verschweißenden Struktur (2, 3) und dem fokussierten Laserstrahl bewirkt wird, wobei die Einrichtung, mit der eine relative Bewegung zwischen der zu verschweißenden Struktur (2, 3) und dem fokussierten Laserstrahl (1) bewirkt wird, eine Einrichtung (12) umfasst, mit der die zu verschweißende Struktur (2, 3) in Drehung um die Achse (A) des Rades herum versetzt wird, und die Vorrichtung **dadurch gekennzeichnet ist, dass** die Einrichtung (11) zum Tragen der zu verschweißenden Struktur (2, 3) wenigstens ein Paar gegenläufiger Räder (14, 15) umfasst, die an einander gegenüberliegenden Seiten mit der Umfangswand (4) der Felge in Eingriff sind.

6. Vorrichtung nach Anspruch 5, **dadurch gekennzeichnet, dass** die Einrichtung, mit der eine relative Bewegung zwischen der zu verschweißenden Struktur (2, 3) und dem fokussierten Laserstrahl (1) bewirkt wird, eine Motoreinrichtung (16) umfasst, die Drehung einer sich drehenden Plattform (12) steuert, an der die zu verschweißende Struktur (2, 3) angebracht werden soll.

7. Vorrichtung nach Anspruch 5, **dadurch gekennzeichnet, dass** die Vorrichtung eine sich frei drehende Plattform (12) umfasst, an der die zu verschweißende Struktur (2, 3) angebracht werden soll, und dass die Motoreinrichtung aus dem wenigstens einen Paar gegenläufiger Räder (14, 15) besteht.

8. Vorrichtung nach Anspruch 5, **dadurch gekennzeichnet, dass** ein erstes Rad (14) des Paars gegenläufiger Räder eine feststehende Achse (B) hat und ein zweites Rad (15) eine verstellbare Achse (C) hat, die in einer Richtung (Y) senkrecht zu der Achse (C) des zweiten Rades (15) über eine Betätigungseinrichtung verschoben werden kann, die dazu dient, das zweite Rad (15) mit einer Kraft, die ausreicht, um mögliche fehlerhafte Positionierung der zu verschweißenden Teile (2, 3) zu beseitigen, an das erste Rad (14) zu pressen.

## Revendications

1. Procédé de soudage au laser (1) d'une jante (2) sur le disque (3) d'une roue pour véhicules à moteur, dans lequel :
- ladite jante (2) présente une paroi circonférentielle (4), avec une surface interne (5) ; et
- ledit disque (3) présente une partie circonférentielle (6), qui est en contact avec ladite surface interne (5) de la jante, ladite partie circonférentielle (6) ayant un rebord d'extrémité circonférentiel (7),
ledit procédé comprenant l'opération de focalisation du faisceau laser (1) dans la zone de contact entre la partie circonférentielle (6) du disque et la surface interne (5) de la jante, dans une position correspondant audit rebord d'extrémité circonférentiel (7) du disque, et ledit procédé prévoyant l'opération consistant à fournir :
- des moyens (10) pour focaliser le faisceau laser (1) ;
- des moyens (11) pour supporter la structure à souder, constituée par la jante (2) avec le disque (3) préassemblé par emmanchement de force à l'intérieur ; et
- des moyens pour imprimer un mouvement relatif entre la structure à souder (2, 3) et le faisceau laser focalisé (1), les moyens (12) pour imprimer un mouvement relatif entre la structure à souder (2, 3) et le faisceau laser focalisé étant préagencés de sorte à comprendre des moyens pour régler la structure à souder (2, 3) en rotation autour de l'axe (A) de la roue, ledit procédé étant **caractérisé en ce que** les moyens (11) pour supporter la structure à souder (2, 3) sont préagencés de sorte à comprendre au moins une paire de roues contrarotatives (14, 15), qui se mettent en prise, sur les côtés opposés, avec la paroi circonférentielle (4) de la jante.

2. Procédé selon la revendication 1, **caractérisé en ce que** les moyens pour imprimer un mouvement relatif entre la structure à souder (2, 3) et le faisceau laser focalisé (1) sont préagencés de sorte à comprendre des moyens de moteur (16) qui commandent la rotation d'une plate-forme tournante (12) sur laquelle doit être montée la structure (2, 3) à souder.

3. Procédé selon la revendication 1, **caractérisé en ce qu'**il comprend l'opération consistant à prévoir une plate-forme à rotation libre (12), sur laquelle doit être montée la structure (2, 3) à souder, et les moyens de moteur sont préagencés de sorte à être constitués de ladite au moins une paire de roues contrarotatives (14, 15).

4. Procédé selon la revendication 1, **caractérisé en ce qu'**il comprend les opérations consistant à :
- prévoir une première roue (14) de ladite paire de roues contrarotatives avec un axe fixe (B), et une seconde roue (15) avec un axe ajustable (C) qui peut être déplacé dans une direction (K), perpendiculaire à l'axe (C) de la seconde roue (15) ; et
- prévoir des moyens actionneurs conçus pour presser la seconde roue (15) contre la première roue (14) afin d'éliminer tout positionnement défectueux éventuel des pièces (2, 3) à souder.

5. Dispositif pour soudage au laser d'une jante (2) sur un disque (3) d'une roue pour véhicules à moteur, dans lequel :
- ladite jante (2) présente une paroi circonférentielle (4), avec une surface interne (5) ; et
- ledit disque (3) présente une partie circonférentielle (6), qui est en contact avec ladite surface interne (5) de la jante et a un rebord d'extrémité circonférentielle (7),
dans lequel ledit dispositif comprend des moyens (10) pour focaliser le faisceau laser (1) dans la zone de contact entre la partie circonférentielle (6) du disque et la surface interne (5) de la jante, dans une position correspondant audit rebord d'extrémité circonférentiel (7) du disque, et dans lequel les moyens (10) pour focaliser le faisceau laser comprennent ;
- des moyens (10) pour focaliser le faisceau laser ;
- des moyens (11) pour supporter la structure à souder, constituée par la jante (2) avec le disque (3) préassemblé par emmanchement de force à l'intérieur ; et
- des moyens pour imprimer un mouvement relatif entre la structure à souder (2, 3) et le faisceau laser focalisé, les moyens pour imprimer un mouvement relatif entre la structure à souder (2, 3) et le faisceau laser focalisé (1) comprenant des moyens (12) pour régler la structure à souder (2, 3) en rotation autour de l'axe (A) de la roue, ledit dispositif étant **caractérisé en ce que** les moyens (11) pour supporter la structure à souder (2, 3) comprennent au moins une paire de roues contrarotatives (14, 15), qui se mettent en prise, sur les côtés opposés, avec la paroi circonférentielle (4) de la jante.

6. Dispositif selon la revendication 5, **caractérisé en ce que** les moyens pour imprimer un mouvement relatif entre la structure à souder (2, 3) et le faisceau laser focalisé (1) comprennent des moyens de moteur (16) qui commandent la rotation d'une plate-forme tournante (12), sur laquelle doit être montée la structure (2, 3) à souder.

7. Dispositif selon la revendication 5, **caractérisé en ce que** le dispositif comprend une plate-forme à rotation libre (12), sur laquelle doit être montée la structure (2, 3) à souder, et **en ce que** les moyens de moteur sont constitués de ladite au moins une paire de roues contrarotatives (14, 15).

8. Dispositif selon la revendication 5, **caractérisé en ce qu'**une première roue (14) de ladite paire de roues contrarotatives a un axe fixe (B), et qu'une seconde roue (15) a un axe ajustable (C) qui peut être déplacé dans une direction (X), perpendiculaire à l'axe (C) de la seconde roue (15), via des moyens actionneurs conçus pour presser la seconde roue (15) contre la première roue (14) avec une force suffisante pour éliminer tout positionnement défectueux éventuel des pièces (2, 3) à souder.
